# FASCICULE DE BREVET EUROPEEN

(11) **EP 2 386 175 B1**
(45) Date de publication et mention de la délivrance du brevet: **27.07.2016**
(21) Numéro de dépôt: 10706697.9
(22) Date de dépôt: 08.01.2010
(51) Int. Cl.: H04W 36/14, H04W 48/02, H04W 84/04

(54) **GESTION DES LIENS RADIO DANS UN SYSTEME DE RADIOCOMMUNICATION**
VERWALTUNG VON FUNKVERBINDUNGEN IN EINEM IN EINEM FUNKKOMMUNIKATIONSSYSTEM
RADIO LINK MANAGEMENT IN A RADIO COMMUNICATION SYSTEM

(30) Priorité: 09.01.2009 FR 0950108
(43) Date de publication de la demande: 16.11.2011
(73) Titulaire: ALCATEL LUCENT, 92100 Boulogne-Billancourt (FR)
(72) Inventeur: LECLERC, Brice, F-91620 Nozay (FR); CONTE, Alberto, F-91620 Nozay (FR)
(74) Mandataire: Berthier, Karine
(86) Numéro de dépôt international: PCT/FR2010/050024
(87) Numéro de publication internationale: WO 2010/079306

(56) Documents cités:
- EP-A1- 2 003 915
- WO-A1-2005/099185
- US-A1- 2004 192 211

## Description

La présente invention se rapporte à la gestion des liens radio dans un système de radio communication avec les mobiles.

Le développement récent du concept d'accès large-bande dans un contexte résidentiel a entraîné l'émergence de nouvelles solutions conçues pour remplir ce besoin notamment dans le domaine de l'accès sans-fil. Un ensemble de solutions récentes, regroupées sous l'appellation commune « femto » ou « gateway résidentielle », offrent notamment à des usagers résidentiels l'accès à des transmissions sans-fil à haut-débit. La solution femto fournit typiquement une interface radio conforme à un standard de radiocommunication de troisième génération, ou équivalent, et s'insère au sein d'une infrastructure d'un infrastructure de réseau d'accès correspondant. Un exemple en est fourni par les points d'accès femto conformes au standard de troisième génération UMTS (« Universal Mobile Télécommunication System »), qui sont aptes à communiquer avec des équipements utilisateurs sur l'interface radio conformément aux spécifications de communication sur l'interface air pour les systèmes UMTS, et disposent d'une interface de communication avec un infrastructure de réseau d'accès de type UMTS.

Un point d'accès femto consiste typiquement en une station de base (ou un routeur de station de base (en anglais, « Base Station Router »)) de petite taille et faible puissance, capable d'émettre et de recevoir des signaux radio conformément aux spécifications d'interface radio d'un système de radiocommunication, par exemple cellulaire, auquel il est associé. Il permet ainsi d'étendre la couverture radio dudit système, en fournissant des moyens de couverture à l'intérieur des bâtiments (en anglais, « indoor coverage »), mais aussi une couverture radio à l'échelle résidentielle pour un accès large bande sans-fil résidentiel. L'appellation « femto » fait généralement référence à la petite taille de la cellule radio générée par ces points d'accès lorsqu'ils forment une partie d'un réseau de radiocommunication cellulaire, par comparaison avec la taille des cellules radio générées par les stations de base « classiques » d'un système de radiocommunication cellulaire. Le point d'accès première vers celle d'une seconde cellule, et le handover en douceur (« soft handover », ou SHO), que supportent certains systèmes et dans lequel il existe une phase plus ou moins longue où le mobile communique simultanément avec les stations de base.

Le système de troisième génération UMTS (« Universal Mobile Telecommunication System ») utilise une technique d'accès multiple à répartition par codes à large bande (W-CDMA, «Wideband Code-Division Multiple Access »), ce qui lui permet de supporter le HHO et le SHO. Son évolution, dite LTE (« Long Term Evolution) supporte seulement le HHO.

Les procédures de handover sont exécutées dans les systèmes cellulaires, de façon automatique en général, de manière à assurer au mobile en mode connecté, c'est-à-dire ayant une communication en cours, une qualité de lien radio suffisamment bonne pour que la communication puisse être poursuivie dans des conditions favorables. D'autres critères de handover existent également, en se basant sur des considérations non directement liées aux conditions de propagation, comme par exemple la répartition du trafic en fonction du type de cellules.

Une procédure de handover comporte de manière classique une étape de mesure, dans laquelle une station mobile et une station de base au moins effectuent régulièrement des mesures radio relatives à des conditions de propagation, descendantes (mesures au niveau du récepteur du mobile) ou montantes (mesures au niveau du récepteur d'une ou plusieurs stations de base sur des signaux provenant du mobile). Si un canal de communication est établi entre la station mobile et une station de base, les mesures peuvent être effectuées sur ce canal. Ces mesures reflètent notamment le niveau de signal montant et descendant sur la voie radio. Elles peuvent aussi prendre en compte un indicateur de la qualité du lien radio ainsi qu'un indicateur de la distance séparant la station mobile de la station de base. En outre, la station mobile effectue régulièrement des mesures sur les signaux les plus puissants qu'elle reçoit d'un certain nombre de cellules voisines. Dans l'autre sens, les stations de base de ces cellules voisines peuvent aussi effectuer des mesures sur le signal montant.

Ces mesures sont régulièrement transmises à l'entité du système qui gère la procédure de handover. Celle-ci les traite en les moyennant et en évaluant à partir d'algorithmes mathématiques, si elles répondent à un ou plusieurs critères de handover prédéterminés.

On peut prévoir, dans un système de radiocommunication cellulaire dans lequel les cellules déployées sont organisées selon une structure de type HCS, des procédures de contrôle des handovers intercellulaires visant notamment à minimiser le nombre de handovers effectués tout en préservant la qualité des communications et en optimisant la gestion des ressources radio. Chaque équipement utilisateur se trouvant sous la couverture radio d'un tel système peut ainsi se voir assigner une cellule correspondant à un niveau de la couche HCS. Cette assignation peut se faire en fonction de la vitesse de l'équipement utilisateur. Ainsi, les équipements utilisateur ayant une vitesse rapide se verront assigner une cellule de niveau supérieur (cellule « macro »), tandis que les équipements utilisateur quasi-stationnaires ou étant mobiles mais à faible vitesse se verront assigner une cellule des couches de niveau inférieur. On peut aussi privilégier la gestion des ressources radio, et distribuer la charge que représentent les équipements utilisateur pour le système de radiocommunication cellulaire sur une pluralité de niveaux, en particulier dès lors qu'un des niveaux est au maximum de sa capacité en termes d'usage des ressources radio.

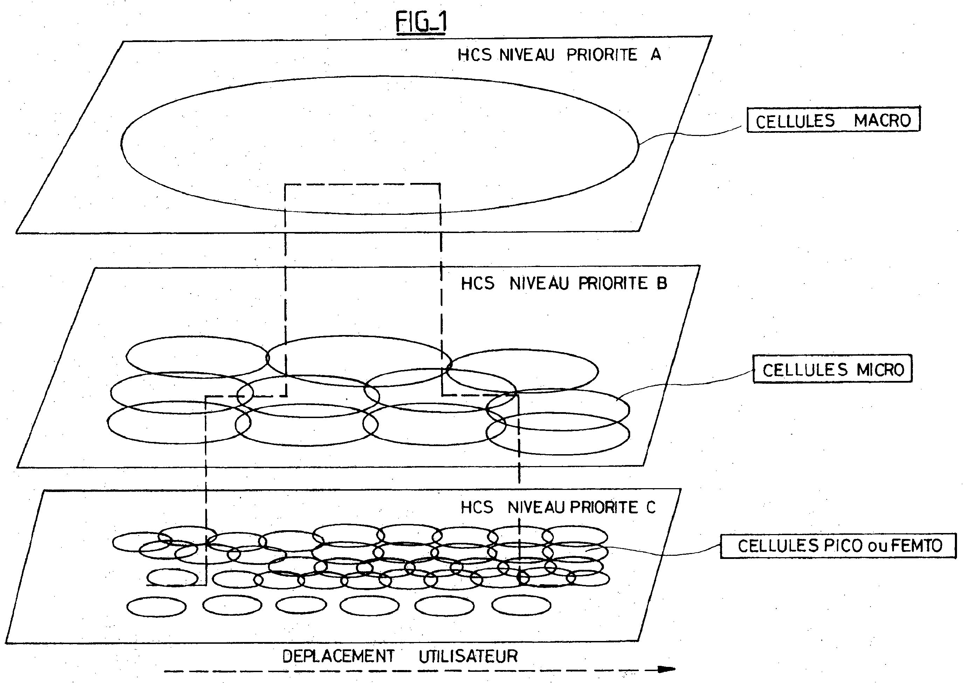

La ligne en pointillés sur la figure 1 illustre le changement de niveaux pour un équipement utilisateur se déplaçant comme indiqué sur la figure. La vitesse de l'équipement utilisateur augmente peu à peu, ce qui a pour conséquence que ce dernier, ayant initialement un lien de communication radio avec une cellule du niveau le plus bas des cellules femto, est basculé vers le niveau intermédiaire puis le niveau supérieur des cellules macro. Dans l'hypothèse d'une charge trop importante de la cellule macro illustré sur la figure 1, l'équipement utilisateur est ensuite à nouveau basculé vers le niveau intermédiaire. Puis, si ce niveau est lui-même fortement chargé, l'équipement utilisateur sera basculé vers le niveau inférieur (sur la figure le niveau des cellules femto).

Un des avantages pour un opérateur d'un système de radiocommunication cellulaire de type HCS est qu'il permet de décharger les cellules du niveau supérieur, c'est-à-dire les cellules ayant la couverture radio la plus large, au profit des cellules des niveaux inférieurs. Le niveau le plus bas, c'est-à-dire regroupant les cellules de taille la plus faible (cellules de type « femto »), présente par ailleurs pour les utilisateurs du réseau l'avantage d'offrir un accès sans fil large bande dans un contexte résidentiel, qui s'accompagne en général d'offres tarifaires attractives.

Cependant, afin de minimiser les interférences, et de réduire le nombre de procédures de handover intercellulaires entre cellules de niveaux différents, les points d'accès femto disponibles sur la marché ou bien envisagés pour l'avenir ont une puissance de transmission très faible (de l'ordre de 1 watt), ce qui limite fortement leur couverture radio et leur capacité à déclencher automatiquement des handovers intercellulaires vers leur niveau de cellules.

L'invention a pour but d'améliorer la situation.

Elle propose à cet effet un procédé de gestion des ressources d'une infrastructure de réseau d'accès d'un réseau de radiocommunication cellulaire, l'infrastructure de réseau d'accès comprenant un premier point d'accès radio desservant au moins une cellule radio et apte à communiquer sur une interface radio avec au moins un équipement utilisateur situé sous la couverture radio de l'une au moins des cellules radio. Selon ce procédé, considéré relativement à un équipement utilisateur se trouvant sous la couverture radio d'une au moins des cellules du premier point d'accès radio, on applique un premier critère d'établissement de lien de communication radio entre un équipement utilisateur et un point d'accès radio si l'équipement utilisateur appartient à un ensemble prédéfini d'équipements utilisateur associés au premier point d'accès radio, aux fins de l'établissement d'un lien de communication radio entre l'équipement utilisateur et le premier point d'accès radio lorsque ledit premier critère est rempli, et on applique un second critère d'établissement de lien de communication radio entre un équipement utilisateur et un point d'accès radio, ledit second critère d'établissement étant distinct du premier critère d'établissement de lien de communication radio, si l'équipement utilisateur n'appartient pas audit ensemble prédéfini d'équipements utilisateur associés au premier point d'accès radio, aux fins de l'établissement d'un lien de communication radio entre l'équipement utilisateur et le premier point d'accès radio lorsque ledit second critère est rempli.

Le critère d'établissement de lien de communication radio appliqué est ainsi différent selon que l'équipement utilisateur appartient ou non à un ensemble prédéfini d'équipements utilisateur associés au point d'accès radio considéré.

Dans un mode particulier de réalisation, on envisage des critères d'établissement de lien radio prédéfinis, par exemple relativement à la qualité de transmission entre un point d'accès radio et un équipement utilisateur. Dans ce dernier cas, on peut avantageusement mesurer une grandeur représentative de la qualité de la transmission radio entre l'équipement utilisateur et le premier point d'accès radio, et ainsi établir un lien de communication radio lorsque la grandeur mesurée remplit le premier, respectivement second, critère d'établissement de lien de communication radio. L'application des critères radio dans cet exemple particulier peut comprendre la comparaison avec un seuil de qualité de réception par l'équipement utilisateur.

Le procédé proposé peut avantageusement être mis en oeuvre dans des réseaux de radiocommunication cellulaires, dans lesquels certaines au moins ou l'ensemble des cellules radio des points d'accès radio de l'infrastructure de réseau d'accès sont réparties pour former une pluralité de catégories, chaque catégorie regroupant une ou plusieurs cellules radio en fonction de la taille de leurs couvertures radio respectives. Dans ce cas de figure, le premier critère est associé à toutes les cellules d'une même catégorie.

La grandeur représentative de la qualité de la transmission radio entre ledit équipement utilisateur et le premier point d'accès radio peut avantageusement être choisie représentative d'un niveau de puissance d'un signal reçu du premier point d'accès radio.

Le procédé proposé peut par ailleurs être avantageusement appliqué à des infrastructures de réseau d'accès de type CDMA, auquel cas la grandeur représentative de la qualité de la transmission radio entre ledit équipement utilisateur et le premier point d'accès radio peut être choisie représentative d'un niveau d'énergie par chip reçue sur un canal pilote du premier point d'accès radio.

D'autre part, lorsque l'infrastructure de réseau d'accès comprend un deuxième point d'accès radio desservant au moins une cellule radio, un lien de communication radio étant établi entre l'équipement utilisateur et le second point d'accès radio, il est prévu en outre de supprimer le lien de communication radio entre l'équipement utilisateur et le second point d'accès radio une fois le lien de communication radio entre ledit équipement et le premier point d'accès radio établi.

On peut ainsi privilégier l'établissement de liens de communication radio entre un équipement utilisateur et un point d'accès radio auquel il est associé, au détriment d'autres liens de communication radio établis avec d'autres point d'accès radio auxquels l'équipement utilisateur n'est pas associé ou pour lesquels il n'est pas prévu d'association avec des équipements utilisateurs. On peut choisir de conserver ces autres liens qui co-existeront avec le lien de communication radio établi entre l'équipement utilisateur et le point d'accès radio associés, ou bien de supprimer ces autres liens pour forcer l'existence d'un unique lien de communication radio entre l'équipement utilisateur et l'infrastructure de réseau d'accès, en l'occurrence celui établi entre l'équipement utilisateur et le point d'accès radio associés.

Le premier point d'accès radio peut être avantageusement choisi comme constituant tout ou partie d'un noeud d'accès radio de type résidentiel ou « femto ».

Selon un autre aspect, l'invention propose un dispositif de gestion de liens de communication radio d'un équipement utilisateur avec au moins un point d'accès radio d'une infrastructure de réseau d'accès d'un réseau de radiocommunication cellulaire. comprenant un premier point d'accès radio desservant au moins une cellule radio, le dispositif comprenant des moyens d'interface (MI) agencés pour recevoir une information d'identification d'une cellule sous la couverture radio de laquelle l'équipement utilisateur se trouve, et des moyens de contrôle (MC) agencés pour comparer l'information d'identification de cellule reçue sur les moyens d'interface (MI) avec au moins un identifiant de cellule radio dudit premier point d'accès radio, et pour, lorsque l'information d'identification et l'identifiant correspondent, appliquer un premier critère d'établissement de lien de communication radio, aux fins de l'établissement d'un lien de communication radio entre l'équipement utilisateur et le premier point d'accès radio lorsque ledit premier critère est rempli, et lorsque l'information d'identification et l'identifiant ne correspondent pas, appliquer un second critère d'établissement de lien de communication radio, distinct du premier critère d'établissement de lien de communication radio, aux fins de l'établissement d'un lien de communication radio entre l'équipement utilisateur et le premier point d'accès radio lorsque ledit second critère est rempli.

Dans un mode particulier de réalisation du dispositif, les moyens de contrôle (MC) sont agencés pour appliquer des premier et second critères d'établissement de lien de communication radio prédéfinis, par exemple relativement à la qualité de transmission entre un équipement utilisateur et un point d'accès radio de l'infrastructure de réseau d'accès. Les moyens d'interface (MI) peuvent en outre être agencés pour recevoir une mesure d'une grandeur représentative de la qualité de transmission entre l'équipement utilisateur et le premier point d'accès radio, et les moyens de contrôle (MC) en outre agencés pour établir un lien de communication radio lorsque la mesure de grandeur reçue sur les moyens d'interface (MI) remplit le premier, respectivement second, critère d'établissement de lien de communication radio.

Les moyens de contrôle (MC) peuvent par ailleurs être agencés pour appliquer des premier et second critères d'établissement de lien de communication radio comprenant respectivement des premier et second seuils de qualité de réception par l'équipement utilisateur.

Ce dispositif de gestion de liens de communication radio pourra avantageusement être mis en oeuvre au sein d'un équipement utilisateur comprenant des moyens de communication (MCOM) sur une interface radio avec au moins un point d'accès radio d'une infrastructure de réseau d'accès d'un réseau de radiocommunication cellulaire.

Selon un autre aspect, l'invention propose un contrôleur de point d'accès radio d'une infrastructure de réseau d'accès d'un réseau de radiocommunication cellulaire, l'infrastructure de réseau d'accès comprenant un premier point d'accès radio desservant au moins une cellule radio et apte à communiquer sur une interface radio avec au moins un équipement utilisateur situé sous la couverture radio de l'une au moins des cellules radio. Le contrôleur comprend des moyens de réception (MRC) agencés pour recevoir une information d'identification d'un équipement utilisateur se trouvant sous la couverture de l'une au moins des cellules radio du premier point d'accès radio, des moyens de mémoire (MMC) agencés pour conserver des identifiants d'équipements utilisateur, lesdits équipements utilisateur appartenant à un ensemble prédéfini d'équipements utilisateur associés audit premier point d'accès radio, des moyens de gestion de liens de communication radio entre un équipement utilisateur apte à communiquer sur une interface radio avec au moins un point d'accès radio de l'infrastructure de réseau d'accès et un point d'accès radio de l'infrastructure de réseau d'accès (MGC), agencés pour contrôler l'établissement de liens de communication radio entre le premier point d'accès radio et un équipement utilisateur, et des moyens de contrôle (MCC) agencés pour comparer une information d'identification d'un équipement utilisateur reçue par les moyens de réception avec l'un au moins desdits identifiants d'équipements utilisateur, et pour, lorsque l'information d'identification et l'un au moins desdits identifiants correspondent, requérir des moyens de gestion de liens de communication l'application d'un premier critère d'établissement de lien de communication radio, aux fins de l'établissement d'un lien de communication radio entre l'équipement utilisateur et le premier point d'accès radio lorsque ledit premier critère est rempli, et lorsque l'information d'identification ne correspond à aucun desdits identifiants, requérir des moyens de gestion de liens de communication radio l'application d'un second critère d'établissement de lien de communication radio, distinct du premier critère d'établissement de lien de communication radio, aux fins de l'établissement d'un lien de communication radio entre l'équipement utilisateur et le premier point d'accès radio lorsque ledit second critère est rempli.

Dans un mode particulier de réalisation du contrôleur, les moyens de gestion de liens de communication radio (MGC) sont agencés pour appliquer des premier et second critères d'établissement de lien de communication radio prédéfinis, par exemple relativement à la qualité de transmission entre un équipement utilisateur et un point d'accès radio de l'infrastructure de réseau d'accès. Les moyens de réception (MRC) peuvent en outre être agencés pour recevoir une mesure d'une grandeur représentative de la qualité de transmission entre l'équipement utilisateur et le premier point d'accès radio, les moyens de contrôle (MCC) en outre agencés pour transmettre aux moyens de gestion de liens de communication radio (MGC) la mesure de grandeur reçue par les moyens de réception, et les moyens de gestion de liens de communication radio (MGC) en outre agencés pour établir un lien de communication radio lorsque la mesure de grandeur remplit le premier, respectivement second, critère d'établissement de lien de communication radio.

Les moyens de gestion de liens de communication radio (MGC) pourront aussi être agencés pour appliquer des premier et second critères comprenant respectivement des premier et second seuils de qualité de réception par l'équipement utilisateur.

L'invention propose enfin un programme d'ordinateur chargeable dans une mémoire associée à un processeur, et comprenant des instructions pour la mise en oeuvre d'un procédé tel que défini ci-dessus lors de l'exécution dudit programme par le processeur, ainsi qu'un support informatique sur lequel est enregistré ledit programme.

D'autres particularités et avantages de la présente invention apparaîtront dans la description ci-après d'exemples de réalisation non limitatifs, en référence aux dessins annexés, dans lesquels :
- la figure 1 illustre un ensemble de cellules d'un système de radiocommunication cellulaire organisées selon une hiérarchie de type HCS ;
- la figure 2 montre un schéma d'architecture d'un système UMTS auquel l'invention peut s'appliquer ;
- la figure 3 est un diagramme montrant les étapes d'un procédé selon un mode de réalisation de l'invention;
- la figure 4 est un diagramme montrant les étapes d'un procédé selon un autre mode de réalisation de l'invention ;
- la figure 5 illustre de façon partielle et schématique un exemple d'équipement utilisateur selon l'invention;
- la figure 6 illustre de façon partielle et schématique un exemple de contrôleur selon l'invention.

Dans la présente description, on se place dans le cas non limitatif d'un point d'accès, de type femto, compris dans un réseau d'accès d'un réseau de radiocommunication cellulaire de type UMTS en mode FDD (« Frequency Division Duplex »). Mais, l'invention n'est pas limitée à ce type de réseau. Elle concerne en effet tous les réseaux de radiocommunication cellulaire, et notamment ceux qui mettent en oeuvre des transferts de cellule (ou handhovers), notamment les réseaux à répartition en mode circuit, comme par exemple les réseaux de type CDMA et CDMA-2000, et les réseaux à répartition en mode paquet, comme par exemple les réseaux de type W-CDMA (tels que les réseaux UMTS ou FOMA) ou de type WiMAX.

Par ailleurs, on considère dans ce qui suit, à titre d'exemple non limitatif, que les équipements de communication non filaires (ou radio) (UE) sont des téléphones mobiles cellulaires. Mais, l'invention n'est pas limitée à ce type d'équipement de communication non filaire. Elle concerne en effet tous les équipements (ou terminaux) électroniques, mobiles ou portables, capables d'établir des communications avec un réseau de radiocommunication cellulaire. Par conséquent, il pourra également s'agir d'ordinateurs portables, d'assistants personnels numériques (ou PDAs), ou de récepteurs de contenus, dès lors qu'ils sont équipés de moyens de communication non filaires.

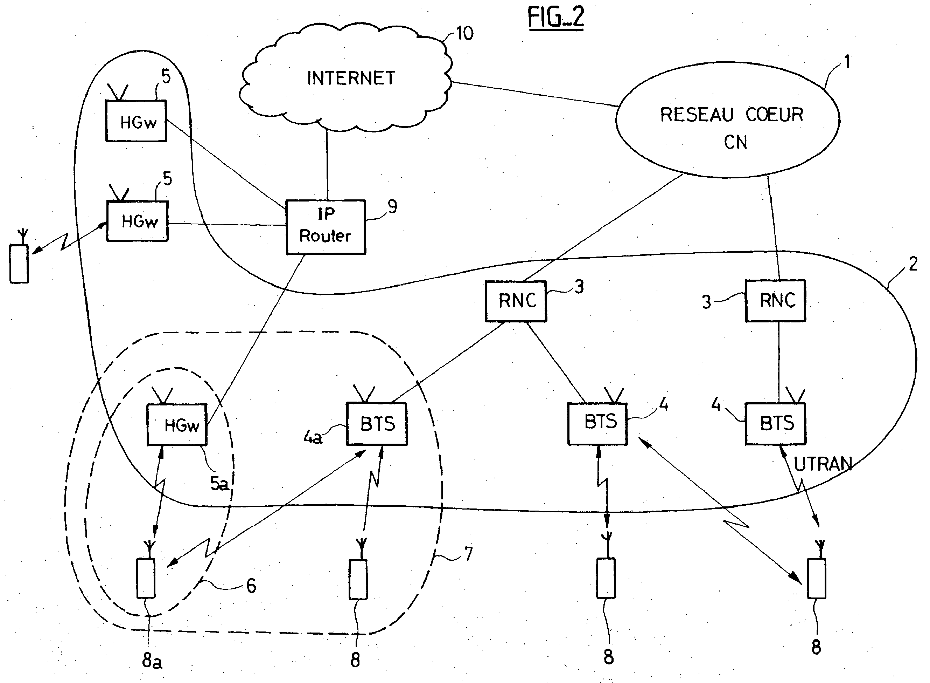

La figure 2 montre un réseau de radiocommunication cellulaire comprenant une infrastructure de réseau d'accès de type UMTS incluant des points d'accès de type femto. L'UMTS est un système de radiocommunication dont le réseau d'accès, appelé UTRAN (« UMTS Terrestrial Radio Access Network »), utilise un accès multiple à répartition par codes (CDMA, «Code Division Multiple Access »), c'est-à-dire que les symboles transmis sont multipliés par des codes d'étalement constitués d'échantillons appelés « chips » dont la cadence est supérieure à celle des symboles transmis. Les codes d'étalement distinguent différents canaux physiques PhCH (en anglais « Physical Channel ») qui sont superposés sur la même ressource de transmission constituée par une fréquence porteuse. Les propriétés d'auto- et d'inter-corrélation des codes d'étalement permettent au récepteur de séparer les PhCH et d'extraire les symboles qui lui sont destinés.

Le réseau de radiocommunication cellulaire, de type UMTS, comprend un réseau coeur (en anglais « core network », CN) 1 comprenant des commutateurs interconnectés appelés MSC pour ceux qui fournissent des services de commutation de circuits, et SGSN pour ceux qui fournissent des services de commutation de paquets. Dans le réseau d'accès radio 2, communément appelé UTRAN dans le cas de l'UMTS, des contrôleurs de réseau radio (en anglais « Radio Network Contrôller ») RNCs 3 sont connectés à des commutateurs du réseau coeur. Chaque RNC supervise une ou plusieurs stations de base 4, appelées Node-B, au moyen d'une interface désignée sous l'acronyme luB dans les spécifications UMTS. Les Node-Bs sont distribuées géographiquement de manière à fournir la couverture radio souhaitée, et chaque Node-B dessert une ou plusieurs cellules radio 7 couvrant la zone où le service cellulaire est accessible au public.

Pour l'UMTS en mode FDD sur la liaison descendante (de l'UTRAN vers les UEs), un code primaire de brouillage (aussi communément appelé code de « scrambling ») est alloué à chaque station de base, et différents canaux physiques utilisés par cette station de base sont distingués par des codes de « channelisation » mutuellement orthogonaux. Pour chaque PhCH, le code d'étalement global est le produit du code de « channelisation » et du code de « scrambling » de la station de base. Les différents canaux physiques, comprenant des canaux communs et des canaux dédiés, obéissent à une structure de trame dans laquelle des trames de 10ms se succèdent sur la fréquence porteuse utilisée par la station de base. Chaque trame est subdivisée en 15 tranches temporelles (« timeslots » ou « slots ») de 666 µs chacune.

Parmi les différents canaux physiques communs dans le sens descendant se trouvent un canal pilote (CPICH, « Common Pilot Channel »), un canal de contrôle primaire (P-CCPCH, « Primary Common Control Physical Channel »), un canal de contrôle secondaire (S-CCPCH, « Secondary Common Control Physical Channel », un canal de synchronisation (SCH, « Synchronisation Channel »).

Des points d'accès femto 5 distribuées sur la zone de couverture radio des Node-Bs 4 définissent des couvertures radio de petite taille 6 qui sont, si ce n'est entièrement, quasiment entièrement incluses dans une ou plusieurs des cellules radio desservies par les Node-Bs 4. La couverture radio 6 d'un point d'accès femto 5 est assez faible, typiquement de l'ordre d'une dizaine de mètres. Le point d'accès femto 5 peut par exemple consister en un équipement indépendant, de préférence de faible encombrement, destiné à être installé en environnement résidentiel, ou aussi en un module d'accès radio embarqué au sein d'un équipement de type « gateway » comprenant en outre un décodeur de signaux de télévision, un accès WiFi, un accès Ethernet, un modem ADSL, etc.. Dans l'exemple non limitatif considéré, la couverture radio d'un point d'accès femto 5 du réseau d'accès radio UTRAN 2 est aussi une cellule, de petite taille, par exemple de dimension permettant de couvrir une habitation résidentielle. La cellule 6 d'un point d'accès femto, communément appelée « cellule femto », est typiquement incluse, dans sa totalité ou presque, dans une ou plusieurs cellules 7 de Node-Bs 4, communément appelées « cellule macro ».

Les BTSs 4 et points d'accès femto 5 sont aptes à communiquer sur l'interface de radiocommunication avec les stations mobiles 8, 8a, aussi appelées UEs (en anglais, « User Equipment ») conformément aux spécifications correspondantes du système UMTS. Le point d'accès femto 5 comprend pour ce faire un module de transmission radio et un module de réception radio.

Un point d'accès femto 5 comprend par ailleurs une liaison de transmission à haut-débit, utilisant par exemple une interface de type DSL, vers le réseau internet 6, par l'intermédiaire d'un routeur IP 9. Cela permet de raccorder l'ensemble du réseau de points d'accès femto 5 avec le reste de l'infrastructure UTRAN 2 et le réseau coeur 1.

Un point d'accès femto 5 peut être implémenté selon différentes architectures. Il peut intégrer l'ensemble des fonctions et capacités typiquement implémentées au sein d'une station de base, voire même l'ensemble des fonctions d'une station de base et d'un contrôleur de station de base. Il peut à l'inverse n'intégrer qu'une partie des fonctions usuellement offertes par une station de base, et consister par exemple en une tête radio déportée (en anglais « Remote Radio Head », ou RRH) connectée à un contrôleur par l'intermédiaire de sa liaison de transmission à haut débit.

Chaque UE 8, 8a peut être dans plusieurs états de liaison avec l'UTRAN, gérés par un protocole de gestion des ressources radio (RRC, «Radio Resource Control») mis en oeuvre au niveau du RNC et au niveau de l'UE (voir spécification technique 3G TS 25.331, "Radio Resource Control (RRC); Protocol Spécification (Release 6)", version 6.19.0 publiée en septembre 2008 par le 3GPP (3rd Génération Partnership Project), section 7). Dans certains de ces états, l'UE est en connexion active avec le système de radiocommunication, c'est-à-dire notamment qu'il peut envoyer à destination de la station de base des signaux radio relatifs à une communication en cours.

Lorsque l'UE est sous tension et dans une cellule sélectionnée sans avoir de communication en cours avec l'UTRAN, il est dans un état de veille. Les processus de sélection initiale et de resélection de cellule sont décrits dans la spécification technique 3G TS 25.304, version 6.10.0 publiée en mars 2008 par le 3GPP, section 5.2. Dans cet état de veille, après avoir sélectionné une cellule, l'UE reçoit des informations système émises sur un canal de diffusion (BCH) par la station de base de la cellule sélectionnée (voir spécification technique 3G TS 25.331 précitée). Ces informations système incluent des informations de contrôle de l'accès dans le sens montant (de l'UE vers l'UTRAN), ainsi que des informations relatives à la procédure d'accès aléatoire sur la couche physique. Les informations de contrôle à diffuser sur le BCH sont portées par le canal physique P-CCPCH.

Les scénarios de handover dans un système UMTS sont décrits dans la spécification technique 3GPP TS 25.832, "Manifestations of Handover and SRNS Relocation (Release 4)", version 4.0.0, publiée en mars 2001. Les capacités de mesure d'un terminal UMTS sont définies dans la spécification technique 3G TS 25.215, "Physical layer - Measurements (FDD) (Release 6)", version 6.4.0, publiée en septembre 2005.

Un équipement utilisateur UMTS est capable de fournir différentes mesures relatives à chaque cellule avoisinante, notamment à partir du canal physique commun CPICH. Ainsi, un UE peut mesurer le niveau de puissance d'un signal reçu dans une cellule sur le canal CPICH de celle-ci. Cette mesure est notée CPICH_RSCP ("Received Signal Code Power"). Il peut également mesurer une énergie par chip reçue depuis la cellule rapportée à la puissance du bruit. Cette mesure est notée CPICH_Ec/N0.

Ces mesures sont utilisées notamment dans les processus de sélection de cellule et de handover. Un équipement utilisateur en communication avec une cellule ou un ensemble de cellules en SHO (ensemble actif ou "active set") mesure alors le rapport CPICH_Ec/N0 et/ou le CPICH_RSCP pour un certain nombre de cellules voisines (ensemble surveillé ou "monitored set") qui lui sont désignées par l'infrastructure. De telles mesures permettent aux procédures de contrôle de liens exécutées dans le réseau d'accès d'estimer un niveau de qualité pour chaque cellule à un instant donné et donc de sélectionner les cellules les plus appropriées pour servir l'équipement utilisateur.

Dans les systèmes UMTS, l'entité du système qui gère et exécute la procédure de handover est le contrôleur de réseau radio (RNC, "Radio Network Controller") qui récupère les mesures effectuées par les terminaux au moyen du protocole RRC décrit dans la spécification technique TS 25.331 précitée, et celles effectuées par les stations de base au moyen du protocole NBAP ("Node B Application Protocol" décrit dans la spécification technique 3G TS 25.433, version 6.17.0, "UTRAN lub Interface Node B Application Part (NBAP) Signalling", publiée en juin 2008 par le 3GPP).

Revenant à la figure 2, et conformément à la procédure de handover telle que définie pour les réseaux UMTS de type FDD, dès lors qu'il reçoit le signal pilote d'une station de base 4a, 5a de l'infrastructure de réseau d'accès 2, l'UE 8a effectue une mesure P d'une grandeur qui est représentative de la qualité de la transmission radio entre la station de base cible 4a, 5a et lui-même. Cette mesure de grandeur est transmise par ce dernier, par voie d'ondes, à l'infrastructure de réseau d'accès 2. Cette grandeur peut avantageusement être représentative de la puissance des signaux que l'UE 8a reçoit en provenance de la station de base cible 4a, 5a, et correspondre à la mesure CPICH-RSCP décrite ci-dessus. Elle peut aussi, dans un autre mode de réalisation, mieux adapté par exemple aux systèmes UMTS de type TDD, correspondre à la mesure de l'énergie par chip reçue CPICH-Ec/No précédemment décrite. Au sein de l'infrastructure de réseau d'accès UMTS, cette transmission se fait de la station de base qui reçoit la mesure, vers le contrôleur de réseau radio RNC auquel cette dernière est connectée.

Les mesures de la qualité de la transmission radio entre l'UE 8a et une station de base 4a, 5a sont transmises au contrôleur de station de base (en l'occurrence, pour le Node-B 4a, un RNC 3 de l'UTRAN 2), où elles sont exploitées pour l'application d'un critère prédéfini de transfert de cellule. Ce critère est consigné dans une mémoire accessible en lecture par le noeud du réseau d'accès radio en charge de son application, et il n'est pas nécessaire que cette mémoire soit co-localisée sur ledit noeud. Selon un mode de réalisation, ce critère consiste en un seuil correspondant au type de mesures effectuées par un équipement utilisateur et transmises au réseau d'accès radio. Par exemple, dans le cas où la grandeur mesurée représente un niveau de puissance du signal reçu par l'équipement utilisateur 8a de la station de base cible 4a, 5a, le critère peut consister en un seuil auquel la mesure de grandeur est comparée. La mesure CPICH-RSCOP est ainsi comparée à un seuil RSCP_Threshold afin de décider ou non d'un handover vers la cellule cible. Dans le cas où la grandeur mesurée représente l'énergie par chip reçue par l'équipement utilisateur 8a de la station de base cible 4a, 5a, le critère peut aussi consister en un seuil auquel la mesure de grandeur est comparée. La mesure CPICH-Ec/No est ainsi comparée à un seuil Ec/No_Threshold afin de décider ou non d'un handover vers la cellule cible.

L'UE 8a est par ailleurs associé au point d'accès femto 5a, du fait d'une relation préétablie entre l'utilisateur de l'équipement UE 8a et le point d'accès femto 5a. Ce cas de figure peut se rencontrer fréquemment en pratique, dans la mesure où les points d'accès de type femto sont destinés à une utilisation dans un environnement résidentiel. Dès lors, le dispositif point d'accès femto peut être acheté ou loué à un opérateur par un utilisateur ce qui crée de fait une association entre un dispositif et l'utilisateur qui en est le propriétaire ou le locataire (utilisateur « principal »). Cette association peut être étendue à un nombre limité d'utilisateurs, comme par exemple les membres de la famille de l'utilisateur principal. Ces utilisateurs peuvent disposer chacun d'un ou de plusieurs équipements utilisateur, ce qui amène à considérer un ensemble d'équipements utilisateur, noté {UEᵢ}, qui sont associés au point d'accès femto 5a.

Selon un mode de réalisation, cette association entre un ou une pluralité d'équipements utilisateurs, et un point d'accès femto est consignée au niveau de l'infrastructure de réseau d'accès. Dans le cas d'une infrastructure de réseau d'accès radio de type UMTS comme illustré sur la figure 2, cette association pourra par exemple avantageusement être consignée dans une mémoire dont les données sont accessibles et exploitables par les contrôleurs de station de base en charge de la mise en oeuvre de la procédure de transfert de cellule (ou handover).

Cette association est exploitée lors de la mise en oeuvre de la procédure de transfert de cellule pour les équipements utilisateurs {UEᵢ} de l'ensemble précédemment défini, par le biais d'un deuxième critère de transfert de cellule applicable au point d'accès femto 5a. Il n'est pas nécessaire que ce deuxième critère soit spécifique à un point d'accès femto particulier du réseau d'accès radio en question. Au contraire, il peut être avantageux de définir ce deuxième critère en vue de l'appliquer pour les transfert de cellule vers les cellules des points d'accès ou stations de base d'un certain type, par exemple du type femto dans le cadre d'un système de radiocommunication cellulaire dans lequel les cellules déployées sont organisées selon une structure de type HCS.

Ainsi, dans l'exemple illustré sur la figure 2, on définit un deuxième critère de transfert de cellule applicable au point d'accès femto 5a. Lorsque l'équipement utilisateur 8a arrive sous la couverture de la cellule 6 du point d'accès femto 5a, l'UE 8a effectue des mesures de puissance du signal reçu du point d'accès 5a de type CPICH-RSCP, et transmet ces mesures à la station de base avec laquelle un lien de communication radio est établi, par exemple le Node-B 4a. Ces mesures sont transmises à un contrôleur de réseau radio RNC 3 en charge de la mise en oeuvre de la procédure de transfert de cellule vers la cellule 6 du point d'accès femto 5a. Ce contrôleur de réseau radio compare un identifiant de l'équipement utilisateur 8a avec les informations d'identification des équipements utilisateur associés au point d'accès femto 5a. Ces informations d'identification font partie des informations consignées en mémoire relative à l'association entre l'ensemble prédéfini d'équipements utilisateur {UEᵢ} et le point d'accès femto 5a. Dans le cas où le contrôleur de réseau radio détermine que l'équipement utilisateur 8a est un des équipements utilisateur {UEᵢ} associés au point d'accès femto 5a, il applique le deuxième critère de transfert de cellule, et non pas le premier critère. Dans le cas contraire, il applique le premier critère ou tout autre critère selon la procédure de transfert de cellule applicable.

Le deuxième critère de transfert de cellule peut, à l'instar du premier critère, consister en un seuil correspondant au type de mesures effectuées par un équipement utilisateur et transmises au réseau d'accès radio. Par exemple, dans le cas où la grandeur mesurée représente un niveau de puissance du signal reçu par l'équipement utilisateur 8a du point d'accès femto cible 5a, le critère peut consister en un seuil auquel la mesure de grandeur est comparée. La mesure CPICH-RSCP est ainsi comparée à un seuil CFC_RSCP_Threshold (l'acronyme CFC désignant la cellule de la femto du client, en anglais « Customer Femto Cell ») afin de décider ou non d'un handover vers la cellule femto cible. Dans le cas où la grandeur mesurée représente l'énergie par chip reçue par l'équipement utilisateur 8a du point d'accès femto cible 5a, le critère peut aussi consister en un seuil auquel la mesure de grandeur est comparée. La mesure CPICH-Ec/No est ainsi comparée à un seuil CFC_Ec/No_Threshold afin de décider ou non d'un handover vers la cellule femto cible. S'il est décidé d'effectuer un tel transfert de cellule, l'UE 8a reçoit une commande de transfert de cellule via la station de base 4a requérant la création d'un lien de communication radio sur la cellule 6 du point d'accès femto 5a.

L'opérateur de l'infrastructure de réseau d'accès radio pourra déterminer la valeur des seuils RSCP_Threshold et CFC_RSCP_Threshold (ou Ec/No_Threshold et CFC_Ec/No_Threshold) de manière à favoriser les transferts de cellule vers des cellules de points d'accès femto. Si les seuils sont définis de manière à ce que le transfert de cellule soit décidé dès lors que la mesure de qualité de transmission radio entre l'UE et la cible excède le seuil applicable, on pourra choisir les seuils applicables aux cellules de type femto inférieurs aux autres seuils. Dans l'exemple de la figure 2, on pourra ainsi choisir un seuil CFC_RSCP_Threshold strictement inférieur au seuil RSCP_Threshold, de manière à favoriser le transfert de cellule du lien de communication radio avec l'équipement UE 8a vers la cellule 6 du point d'accès femto 5a, dès lors qu'il s'avère que l'UE 8a est un des équipements utilisateur associés au point d'accès femto 5a, et ce quand bien même l'UE 8a recevrait les signaux de la station de base 4a avec une puissance supérieure à la puissance des signaux reçus du point d'accès femto 5a.

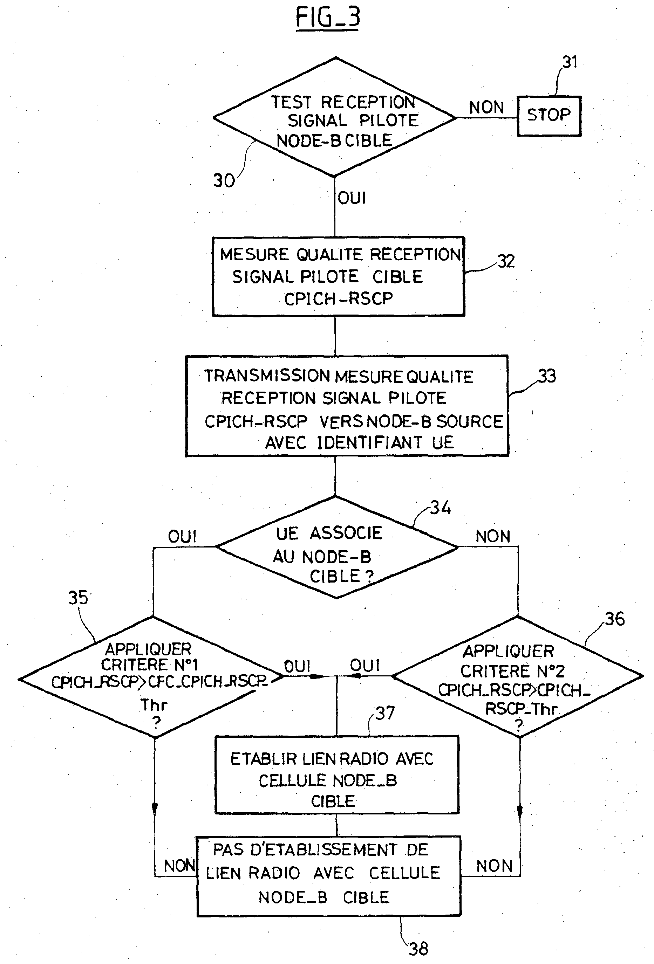

La figure 3 est un diagramme illustrant le procédé décrit ci-dessus. A l'étape 30 l'UE effectue un test de réception du signal pilote (ou signal de balise) d'une station de base cible. S'il ne reçoit pas de signal pilote, il ne peut être envisagé de handover vers une cellule de cette station de base, de sorte que le procédé est stoppé (étape 31). On pourrait aussi envisager une boucle qui teste la réception de signaux pilotes de cellules de stations de base. Si l'UE reçoit le signal pilote sur une cellule d'un Node-B, il peut alors effectuer une ou plusieurs mesures de la qualité de réception du signal pilote (étape 32), notée CPICH-RSCP. Cette mesure est ensuite transmise à l'entité du réseau apte à décider d'un éventuel transfert de cellule, en l'occurrence dans l'exemple précédemment décrit une ou plusieurs entités de l'infrastructure de réseau d'accès radio via le Node-B source (c'est-à-dire le Node-B avec lequel un lien de communication radio est établi) (étape 33). L'entité du réseau apte à décider d'un éventuel transfert de cellule vers une cellule du Node-B cible détermine à l'étape 34 si l'UE est ou non associé au Node-B cible. Si c'est le cas, on applique à l'étape 35 un premier critère pour décider ou non d'un transfert de cellule vers une cellule du Node-B cible en comparant la mesure de qualité de réception CPICH-RSCP avec un premier seuil CFC_CPICH_RSCP-Thr. Si la mesure CPICH-RSCP est supérieure au seuil CFC_CPICH_RSCP-Thr, le transfert de cellule vers une cellule du Node-B cible (comprenant, à tout le moins, l'établissement d'un lien radio avec une cellule du Node-B cible) est effectué (étape 37). Dans le cas contraire, l'établissement d'un lien radio avec une cellule du Node-B cible n'est pas effectué (étape 38). Si l'UE n'est pas associé au Node-B cible, on applique à l'étape 36 un deuxième critère pour décider ou non d'un transfert de cellule vers une cellule du Node-B cible en comparant la mesure de qualité de réception CPICH-RSCP avec un deuxième seuil CPICH_RSCP-Thr. Si la mesure CPICH-RSCP est supérieure au seuil CPICH_RSCP-Thr, le transfert de cellule vers une cellule du Node-B cible (comprenant, à tout le moins, l'établissement d'un lien radio avec une cellule du Node-B cible) est effectué (étape 37). Dans le cas contraire, l'établissement d'un lien radio avec une cellule du Node-B cible n'est pas effectué (étape 38).

L'invention ne se limite pas aux systèmes de radiocommunication cellulaire ne supportant qu'un seul type de handover, et n'est pas davantage limitée par la manière dont le processus de handover est défini dans le système de radiocommunication cellulaire considéré.

Exemple peut être pris des systèmes WiMAX (c'est-à-dire conformes aux normes IEEE 802.16e) dans lesquels un équipement utilisateur peut prendre l'initiative de requérir un transfert de cellule vers une cellule d'une station de base cible. Il peut être avantageux dans les systèmes de ce type, de prévoir que l'information d'association décrite ci-dessus entre un ou une pluralité d'équipements utilisateur {UEᵢ}, et un point d'accès soit consignée au niveau des équipements utilisateur. Les équipements utilisateur {UEᵢ} disposent dès lors d'un identifiant du point d'accès auquel ils sont associés. Lorsqu'un des équipements utilisateur associés {UEᵢ} reçoit le signal pilote ou le signal de balise du point d'accès auquel il est associé, il peut effectuer des mesures de qualité de réception du signal pilote de ce point d'accès, et appliquer un critère de handover différent du critère habituel dès lors qu'il a reconnu qu'il se trouvait sous la couverture radio du point d'accès auquel il est associé.

L'équipement utilisateur associé {UEᵢ} peut en outre avoir connaissance de l'identifiant d'une ou plusieurs cellules macro MCi dont les couvertures radio considérées en combinaison contiennent substantiellement intégralement la couverture radio de la ou des cellules du point d'accès auquel il est associé. Lorsqu'un lien de communication radio est établi avec une de ces cellules macro MCi, l'équipement utilisateur peut tester de sa propre initiative la qualité de réception du signal pilote du point d'accès auquel il est associé.

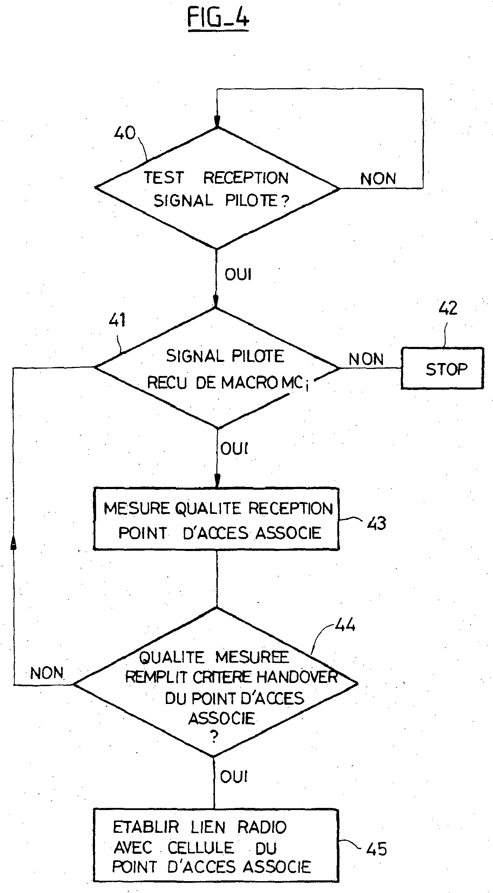

Cette procédure est illustrée sur le diagramme de la figure 4. A l'étape 40, l'équipement utilisateur teste la réception ou non d'un signal pilote. Il poursuit ce test s'il ne reçoit aucun signal. Dans le cas contraire, il vérifie à l'étape 41 si le signal pilote reçu est celui d'une des cellules macro MCi dont les couvertures radio considérées en combinaison contiennent substantiellement intégralement la couverture radio de la ou des cellules du point d'accès radio auquel il est associé. Dans la négative, la procédure s'arrête (étape 42). Dans le cas contraire, l'équipement utilisateur mesure la qualité de réception de signaux éventuellement reçus du point d'accès radio auquel il est associé (étape 43). La mesure de qualité de réception de signaux est ensuite (étape 44) confrontée au critère de handover pour le point d'accès radio auquel il est associé, étant entendu que ce critère est distinct du critère de handover appliqué pour les points d'accès autres que celui auquel il est associé. Si le critère appliqué est rempli, l'équipement utilisateur requiert l'établissement d'un lien de communication radio avec une cellule de son point d'accès radio associé (étape 45). L'étape 41 est répétée dans le cas où le critère appliqué n'est pas rempli.

L'étape d'établissement d'un lien de communication radio avec une cellule du point d'accès radio avec lequel l'équipement utilisateur considéré est associé peut être envisagée tant dans le contexte d'un handover de type « rigide » que dans celui d'un handover de type «en douceur » (soft handover). Le contexte du soft handover correspond à un mode particulier de réalisation de l'invention, dans lequel on considère que le lien de communication radio établi avec une cellule du point d'accès radio avec lequel l'équipement utilisateur considéré est associé peut co-exister avec un ou plusieurs autres liens de communication radio établis antérieurement avec une ou plusieurs cellules des points d'accès radio de l'infrastructure de réseau d'accès radio considérée. Il peut alors être avantageux, pour répondre à une stratégie de gestion des ressources radio visant à éviter l'établissement pour un équipement utilisateur d'une multitude de liens de communication radio dès lors que l'un de ces liens est établi avec une cellule du point d'accès radio auquel il est associé, de supprimer tout ou partie des autres liens de communication radio établis antérieurement.

L'étape d'établissement d'un lien de communication radio avec une cellule du point d'accès radio avec lequel l'équipement utilisateur considéré est associé peut par ailleurs être envisagée indépendamment d'un contexte de handover, et l'invention n'est pas limitée à ce contexte. En effet, cette étape d'établissement ainsi que la détermination du critère applicable pour décider de sa mise en oeuvre peut être par exemple envisagée lors de la mise sous tension de l'équipement utilisateur. Cela permettra de privilégier ou « forcer » l'établissement d'un lien de communication radio initial avec un point d'accès radio plutôt qu'un autre, lorsque l'équipement utilisateur considéré se trouve sous la couverture radio d'un point d'accès radio auquel il est associé. Il n'est ainsi pas nécessaire à la mise en oeuvre du procédé proposé dans ses différents modes de réalisation qu'un lien de communication radio entre l'équipement utilisateur et un point d'accès radio existe au préalable.

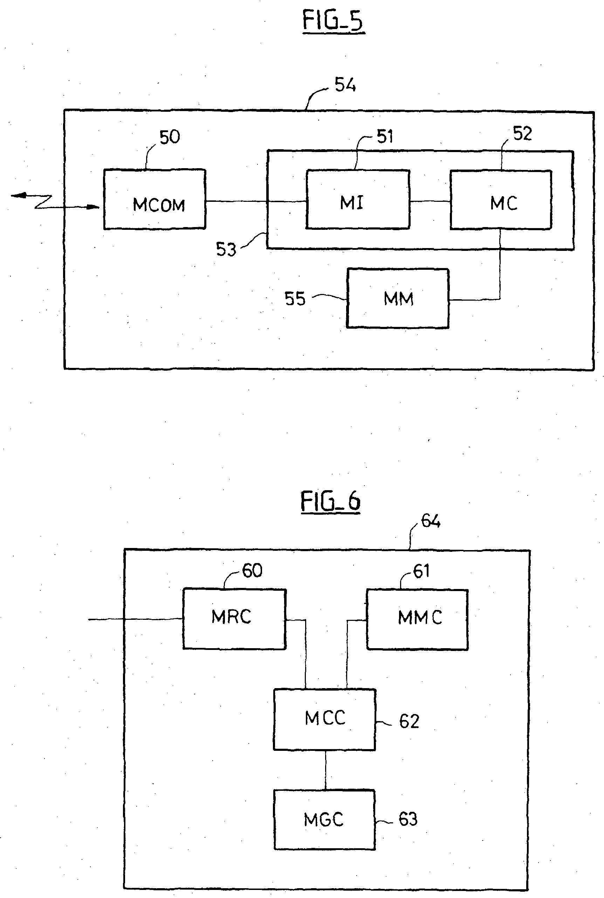

L'équipement utilisateur (54) illustré sur la figure 5 comprend un dispositif de gestion de liens de communication radio (53), et un module de communication (MCOM) sur une interface radio (50). Le module de communication (50) est agencé pour communiquer sur une interface radio avec un ou plusieurs points d'accès radio d'une infrastructure de réseau d'accès d'un réseau de radiocommunication cellulaire, et comprend des moyens de réception de signaux radio ainsi que des moyens de transmission de signaux radio (non représentés sur la figure). Les informations portées par les signaux radio reçues par les moyens de réception sont transmises, après traitement radio, vers un contrôleur (52) par l'intermédiaire d'un module interface (51), apte à communiquer avec le contrôleur (52) et le module de communication (50). Le dispositif de gestion de liens de communication radio (53) comprend le contrôleur (52) et le module interface (51). Le contrôleur (52) est agencé pour, à partir des signaux reçus sur l'interface radio, effectuer un test de réception de signal pilote d'un point d'accès radio de l'infrastructure sous la couverture radio duquel l'équipement utilisateur (54) se trouve. Il reçoit en particulier, parmi d'autres informations portées par le signal pilote reçu, une information d'identification de la cellule sous la couverture radio de laquelle l'équipement utilisateur (54) se trouve. Le contrôleur (52) est par ailleurs agencé pour obtenir un ou plusieurs identifiants, selon les cas, de la ou des cellules d'un point d'accès radio auquel l'équipement utilisateur (54) est associé, lesquels identifiants sont consignés dans des moyens mémoire (55). Ces moyens mémoire (55) peuvent être intégrés dans le contrôleur (52), ou externe au contrôleur (52), voire à l'équipement utilisateur (54) lui-même. Par exemple, lorsque l'équipement utilisateur est un terminal mobile, les moyens mémoire (55) peuvent être compris dans un module de type SIM (en anglais « Subscriber Identity Module ») contenant des informations permettant d'identifier le ou les points d'accès radio auxquels le terminal mobile est associé. Le contrôleur (52) est agencé pour comparer une information d'identification de cellule reçue par l'intermédiaire du module interface (51) avec les identifiants consignés dans les moyens mémoire (55). Il est par ailleurs agencé pour, s'il y a correspondance, appliquer un premier critère d'établissement de lien de communication radio, tandis que s'il n'y a pas correspondance, appliquer un second critère d'établissement de lien de communication radio. Ainsi, si l'équipement utilisateur (54) se trouve sous la couverture radio d'une cellule d'un point d'accès radio auquel il est associé, il pourra requérir ou non l'établissement d'un lien d'accès radio avec cette cellule selon que ce premier critère est rempli ou non.

Par exemple, l'équipement utilisateur peut être associé par configuration à un point d'accès radio de type résidentiel, ou « femto ». Lorsqu'il se trouve sous la couverture radio d'une cellule de son point d'accès femto, et que le signal pilote détecté est celui transmis sur une cellule par son point d'accès femto, il pourra appliquer un critère d'établissement de lien radio avec son point d'accès femto qui aura pour effet de privilégier les liens radio établis avec son point d'accès femto au détriment de ceux établis ou qui pourraient l'être avec un point d'accès « macro » sous la couverture radio duquel il se trouve aussi.

Le contrôleur (64) illustré sur la figure 6 comprend un module de gestion de liens de communication radio (63), un module de réception (60), un module mémoire (61) et un module de contrôle (62). Le module de contrôle (MCC) (62) communique avec le module de gestion de liens de communication radio (63), le module de réception (60), et le module mémoire (61). Le module de réception (60) est agencé pour recevoir, éventuellement par l'intermédiaire de points d'accès radio ou de station de base si le contrôleur n'est pas intégré avec de tels équipements, des informations portées par les signaux radio transmis par des équipements utilisateurs sur une interface radio avec un ou plusieurs points d'accès radio d'une infrastructure de réseau d'accès d'un réseau de radiocommunication cellulaire. Le contrôleur (64) fait partie d'une infrastructure de réseau d'accès, et peut être implémenté dans un noeud indépendant de l'infrastructure, ou bien être combiné avec d'autres fonctions du réseau d'accès. Il peut par exemple être implémenté au sein d'un noeud station de base, ou bien, dans le cas d'un réseau d'accès de type UMTS, d'un noeud de type RNC. Le module de réception (60) est agencé pour recevoir des informations d'identification relatives à des équipements utilisateurs se trouvant sous la couverture radio d'une cellule radio d'un point d'accès radio de l'infrastructure dont les opérations sont contrôlées par le contrôleur (64). Le module de réception (60) transmet les informations d'identification reçues au module de contrôle (62), pour traitement. Le module mémoire (61) est agencé pour conserver en mémoire un ou plusieurs identifiants d'équipements utilisateur correspondant à des équipements utilisateurs associés avec le ou l'un des points d'accès radio de l'infrastructure dont les opérations sont contrôlées par le contrôleur (64). Le module de contrôle (62) récupère les identifiants conservés en mémoire afin de les comparer avec les informations d'identification d'équipement utilisateur reçues du module de réception (60). Le module de contrôle est en outre agencé pour, lorsqu'il y a une correspondance entre les identifiants et les informations d'identification, requérir du module de gestion de liens de communication radio (63) l'application d'un premier critère d'établissement de lien radio en vue d'établir, si ce premier critère est rempli, un lien radio entre l'équipement utilisateur et le point d'accès radio considérés. Lorsqu'il n'y a aucune correspondance entre les identifiants et les informations d'identification, le module de contrôle (62) requiert du module de gestion de liens de communication radio (63) l'application d'un second critère d'établissement de lien radio, distinct du premier, en vue d'établir, si ce second critère est rempli, un lien radio entre l'équipement utilisateur et le point d'accès radio considérés. Le module de gestion de liens de communication radio (63) transmet au module de contrôle (62) le résultat de l'application du critère choisi, ce sur quoi le module de contrôle (62) peut engager la procédure d'établissement de lien radio si le résultat est positif, c'est-à-dire si le critère choisi est rempli. femto est d'autre part connecté à une infrastructure de infrastructure de réseau d'accès du système de radiocommunication cellulaire auquel il est associé au moyen d'une interface de communication large bande, du type généralement de celle des interfaces disponibles en milieu résidentiel, comme par exemple une ligne ADSL ou une interface de réseau câblée.

Dans un système de radiocommunication cellulaire, les points d'accès femto desservent des cellules de petites taille, généralement appelées cellules femto. Un opérateur peut établir une hiérarchie entre différents niveaux de cellules, chaque niveau se caractérisant par la taille des cellules qu'il contient. Un exemple d'une telle classification est donné sur la figure 1, qui montre trois niveaux de groupes de cellules: le premier niveau regroupe les cellules de très petite taille, typiquement de quelques mètres, dites cellules femto. Le niveau supérieur regroupe des cellules de taille plus grande que les cellules femto, dites cellules « micro ». Enfin, le troisième et dernier niveau regroupe les cellules de plus grande taille, dites cellules « macro ». On notera que les couvertures des cellules femto, micro et macro se recouvrent de manière à ce qu'une zone géographique puissent potentiellement être sous la couverture radio d'au moins trois cellules, parmi lesquelles une cellule femto, une cellule micro et une cellule macro. Ce type d'organisation hiérarchique de cellules en fonction de leurs tailles est parfois dénommé Structure Hiérarchique de Cellules, ou en anglais Hierarchical Cell Structure (HCS). Un exemple se trouve dans US2004/192211.

Des procédures de contrôle des liens radio peuvent être mises en place afin de permettre, dans un système de radiocommunication cellulaire comprenant une pluralité de niveaux de cellules dont les couvertures radio respectives se recoupent, c'est-à-dire sont colocalisées, comme illustré sur la figure 1, d'optimiser la qualité des transmissions et de minimiser les interférences entre utilisateurs.

Par ailleurs, la gestion de la mobilité d'un terminal mobile en communication dans un système cellulaire, fait intervenir des procédures de transfert de liens de communication radio entre cellules. Un tel transfert est couramment appelé « handover » intercellulaire ou transfert de cellule. On distingue le handover rigide (« hard handover », ou HHO), qui procède par basculement instantané de la communication de la station de base d'une

## Revendications

1. Procédé de gestion des ressources d'une infrastructure de réseau d'accès d'un réseau de radiocommunication cellulaire, l'infrastructure de réseau d'accès comprenant une pluralité de points d'accès radio (4a, 5a) desservant chacun au moins une cellule radio (7, 6) et aptes à communiquer sur une interface radio avec au moins un équipement utilisateur (8a) situé sous la couverture radio de l'une au moins des cellules radio (7, 6), le procédé comprenant les étapes suivantes, relativement à l'équipement utilisateur se trouvant sous la couverture radio d'une au moins des cellules d'un premier des points d'accès radio :
- déterminer (34) si l'équipement utilisateur appartient à un ensemble prédéfini d'équipements utilisateur associés au premier point d'accès radio,
- si l'équipement utilisateur (8a) appartient à l'ensemble prédéfini d'équipements utilisateur associés au premier point d'accès radio (5a), appliquer (35) un premier critère d'établissement de lien de communication radio entre l'équipement utilisateur et le premier point d'accès radio, le premier critère d'établissement de lien de communication radio étant prédéfini relativement à la qualité de transmission entre le premier point d'accès radio et l'équipement utilisateur, aux fins de permettre l'établissement d'un lien de communication radio entre l'équipement utilisateur et le premier point d'accès radio lorsque ledit premier critère est rempli par une grandeur mesurée représentative de la qualité de la transmission radio entre l'équipement utilisateur (8a) et le premier point d'accès radio (5a);
ledit procédé étant **caractérisé par** les étapes suivantes :
- si l'équipement utilisateur n'appartient pas audit ensemble prédéfini d'équipements utilisateur associés au premier point d'accès radio, appliquer (36) un second critère d'établissement de lien de communication radio entre l'équipement utilisateur et le premier point d'accès radio, ledit second critère d'établissement étant prédéfini relativement à la qualité de transmission entre le premier point d'accès radio et l'équipement utilisateur et étant distinct du premier critère d'établissement de lien de communication radio, aux fins de permettre l'établissement d'un lien de communication radio entre l'équipement utilisateur et le premier point d'accès radio lorsque ledit second critère est rempli par la grandeur représentative mesurée, dans lequel le second critère d'établissement de lien de communication radio exige une qualité de transmission entre le premier point d'accès radio et l'équipement utilisateur plus élevée que le premier critère d'établissement de lien de communication radio.

2. Procédé selon la revendication 1, dans lequel les premier et second critères d'établissement de lien de communication radio comprennent respectivement des premier et second seuils de qualité de réception par l'équipement utilisateur auxquels la grandeur mesurée doit être comparée, le premier seuil de qualité de réception par l'équipement utilisateur étant strictement inférieur au second seuil de qualité de réception par l'équipement utilisateur.

3. Procédé selon l'une quelconque des revendications précédentes, dans lequel certaines au moins ou l'ensemble des cellules radio des points d'accès radio de l'infrastructure de réseau d'accès sont réparties pour former une pluralité de catégories, chaque catégorie regroupant une ou plusieurs cellules radio en fonction de la taille de leurs couvertures radio respectives, et dans lequel le premier critère est associé à toutes les cellules d'une même catégorie.

4. Procédé selon l'une quelconque des revendications 1 à 3, dans lequel la grandeur représentative de la qualité de la transmission radio entre ledit équipement utilisateur et le premier point d'accès radio est représentative d'un niveau de puissance d'un signal reçu du premier point d'accès radio.

5. Procédé selon l'une des revendications 1 à 4, dans lequel l'infrastructure de réseau d'accès est de type CDMA et la grandeur représentative de la qualité de la transmission radio entre ledit équipement utilisateur et le premier point d'accès radio est représentative d'un niveau d'énergie par chip reçue sur un canal pilote du premier point d'accès radio.

6. Procédé selon l'une quelconque des revendications précédentes, dans lequel l'infrastructure de réseau d'accès comprend un deuxième point d'accès radio desservant au moins une cellule radio, avec lequel est établi un lien de communication radio, et dans lequel on supprime le lien de communication radio entre l'équipement utilisateur et le second point d'accès radio une fois le lien de communication radio entre ledit équipement et le premier point d'accès radio établi.

7. Procédé selon l'une quelconque des revendications précédentes, dans lequel le premier point d'accès radio est compris dans un noeud d'accès radio de type résidentiel ou "femto".

8. Contrôleur de point d'accès radio d'une infrastructure de réseau d'accès d'un réseau de radiocommunication cellulaire, l'infrastructure de réseau d'accès comprenant un une pluralité de points d'accès radio (4a, 5a) desservant chacun au moins une cellule radio (7, 6) et aptes à communiquer sur une interface radio avec au moins un équipement utilisateur (8, 8a) situé sous la couverture radio de l'une au moins des cellules radio (7, 6), le contrôleur comprenant :
- des moyens de réception (MRC) agencés pour recevoir une information d'identification d'un équipement utilisateur (8a) se trouvant sous la couverture de l'une au moins des cellules radio d'un premier (5a) des points d'accès radio et pour recevoir une mesure d'une grandeur représentative de la qualité de transmission entre l'équipement utilisateur (8a) et le premier point d'accès radio (5a);
- des moyens de mémoire (MMC) agencés pour conserver des identifiants d'équipements utilisateur, lesdits équipements utilisateur appartenant à un ensemble prédéfini d'équipements utilisateur associés audit premier point d'accès radio (5a);
- des moyens de gestion de liens de communication radio entre l'équipement utilisateur. (8a) apte à communiquer sur une interface radio avec le premier point d'accès radio (5a) de l'infrastructure de réseau d'accès (MGC), agencés pour contrôler l'établissement de liens de communication radio entre le premier point d'accès radio (5a) et l'équipement utilisateur (8a);
- des moyens de contrôle (MCC) agencés pour:
comparer une information d'identification de l'équipement utilisateur (8a) reçue par les moyens de réception avec lesdits identifiants d'équipements utilisateur conservés par les moyens de mémoire (MMC),
transmettre aux moyens de gestion de liens de communication radio (MGC) la mesure de grandeur reçue par les moyens de réception ; et pour,
lorsque l'information d'identification et l'un au moins desdits identifiants correspondent, requérir des moyens de gestion de liens de communication l'application d'un premier critère d'établissement de lien de communication radio, le premier critère d'établissement de lien de communication radio étant prédéfini relativement à la qualité de transmission entre le premier point d'accès radio et l'équipement utilisateur, aux fins de permettre l'établissement d'un lien de communication radio entre l'équipement utilisateur et le premier point d'accès radio lorsque ledit premier critère est rempli par la mesure de grandeur reçue, et
lorsque l'information d'identification ne correspond à aucun desdits identifiants, requérir des moyens de gestion de liens de communication radio l'application d'un second critère d'établissement de lien de communication radio, ledit second critère d'établissement de lien de communication radio étant prédéfini relativement à la qualité de transmission entre le premier point d'accès radio et l'équipement utilisateur et distinct du premier critère d'établissement de lien de communication radio, aux fins de permettre l'établissement d'un lien de communication radio entre l'équipement utilisateur et le premier point d'accès radio lorsque ledit second critère est rempli par la mesure de grandeur reçue,
dans lequel le second critère d'établissement de lien de communication radio exige une qualité de transmission entre le premier point d'accès radio et l'équipement utilisateur plus élevée que le premier critère d'établissement de lien de communication radio.

9. Contrôleur de point d'accès radio selon la revendication 8, dans lequel les moyens de gestion de liens de communication radio (MGC) sont agencés pour appliquer lesdits premier et second critères d'établissement de lien de communication radio, lesdits premier et second critère comprenant respectivement des premier et second seuils de qualité de réception par l'équipement utilisateur.

10. Programme d'ordinateur, chargeable dans une mémoire associée à un processeur, et comprenant des instructions pour la mise en oeuvre d'un procédé selon l'une quelconque des revendications 1 à 7 lors de l'exécution dudit programme par le processeur.

11. Support informatique sur lequel est enregistré un programme selon la revendication 10.

## Patentansprüche

1. Verfahren zur Verwaltung von Ressourcen einer Zugangsnetzwerksinfrastruktur für den Zugang zu einem Mobilfunkkommunikationsnetzwerk, wobei die Zugangsnetzwerksinfrastruktur eine Vielzahl von Funkzugangspunkten (4a, 5a) umfasst, die jeweils mindestens eine Funkzelle (7, 6) bedienen und dafür ausgelegt sind, um über eine Funkschnittstelle mit mindestens einem Benutzergerät (8a) zu kommunizieren, das sich in der Funkabdeckung mindestens einer der Funkzellen (7, 6) befindet, wobei das Verfahren hinsichtlich des sich in der Funkabdeckung mindestens einer der Zellen eines ersten der Funkzugangspunkte befindlichen Benutzergeräts die folgenden Schritte umfasst:
- das Bestimmen (34), ob das Benutzergerät einer vordefinierten Gruppe von Benutzergeräten angehört, die mit dem ersten Funkzugangspunkt assoziiert sind,
- wenn das Benutzergerät (8a) zur vordefinierten Gruppe von mit dem ersten Funkzugangspunkt (5a) assoziierten Benutzergeräten gehört, das Anwenden (35) eines ersten Kriteriums zur Herstellung einer Funkkommunikationsverbindung zwischen dem Benutzergerät und dem ersten Funkzugangspunkt, wobei das erste Kriterium zur Herstellung einer Funkkommunikationsverbindung bezüglich der Übertragungsgualität zwischen dem ersten Funkzugangspunkt und dem Benutzergerät vordefiniert ist, um die Herstellung einer Funkkommunikationsverbindung zwischen dem Benutzergerät und dem ersten Funkzugangspunkt zu ermöglichen, wenn besagtes erstes Kriterium durch eine gemessene, die Qualität der Funkübertragung zwischen dem Benutzergerät (8a) und dem ersten Funkzugangspunkt (5a) repräsentierende Größe erfüllt ist;
wobei besagtes Verfahren durch folgende Schritte gekennzeichnet ist:
- wenn das Benutzergerät nicht zur vordefinierten Gruppe von mit dem ersten Funkzugangspunkt assoziierten Benutzergeräten gehört, das Anwenden (36) eines zweiten Kriteriums zur Herstellung einer Funkkommunikationsverbindung zwischen dem Benutzergerät und dem ersten Funkzugangspunkt, wobei besagtes zweites Kriterium zur Verbindungsherstellung bezüglich der Übertragungsqualität zwischen dem ersten Funkzugangspunkt und dem Benutzergerät vordefiniert ist und sich vom ersten Kriterium für die Herstellung einer Funkkommunikationsverbindung unterscheidet, um die Herstellung einer Funkkommunikationsverbindung zwischen dem Benutzergerät und dem ersten Funkzugangspunkt zu ermöglichen, wenn besagtes zweites Kriterium für eine gemessene, repräsentative Größe erfüllt ist, wobei das zweite Kriterium für die Herstellung einer Funkkommunikationsverbindung eine hochwertigere Übertragungsqualität zwischen dem ersten Funkzugangspunkt und dem Benutzergerät vorgibt, als das erste Kriterium für die Herstellung einer Funkkommunikationsverbindung.

2. Verfahren nach Anspruch 1, wobei das erste und das zweite Kriterium für die Herstellung einer Funkkommunikationsverbindung jeweils erste und zweite Qualitätsschwellenwerte für den Empfang durch das Benutzergerät umfassen, mit denen die gemessenen Größen zu vergleichen sind, wobei der erste Qualitässchwellenwert für den Empfang durch das Benutzergerät zwingend niedriger ist als der zweite Qualitässchwellenwert für den Empfang durch das Benutzergerät.

3. Verfahren nach einem jeglichen der vorgenannten Ansprüche, wobei mindestens einige oder alle Funkzellen der Funkzugangspunkte zur Zugangsnetzwerkinfrastruktur so verteilt sind, dass sie eine Vielzahl von Kategorien bilden, wobei jede Kategorie in Funktion der Größe ihrer jeweiligen Funkabdeckung eine oder mehrere Funkzellen gruppiert, und wobei das erste Kriterium mit allen Zellen einer bestimmten Kategorie assoziiert ist.

4. Verfahren nach einem jeglichen der Ansprüche 1 bis 3, wobei die Größe, welche die Qualität der Funkübertragung zwischen besagtem Benutzergerät und dem ersten Funkzugangspunkt repräsentiert, repräsentativ ist für die Stärke eines vom ersten Funkzugangspunkt empfangenen Signals.

5. Verfahren nach einem der Ansprüche 1 bis 4, wobei die die Infrastruktur des Zugangsnetzwerks vom Typ CDMA ist und die Größe, welche die Qualität der Funkübertragung zwischen besagtem Benutzergerät und dem ersten Funkzugangspunkt repräsentiert, repräsentativ ist für das Energieniveau pro Chip, der auf einem Pilotkanal des ersten Funkzugangspunkts empfangen wird.

6. Verfahren nach einem jeglichen der vorgenannten Ansprüche, wobei die Infrastruktur des Zugangsnetzwerks einen zweiten Funkzugangspunkt umfasst, der mindestens eine Funkzelle bedient, mit welcher eine Funkkommunikationsverbindung besteht, und wobei die Funkkommunikationsverbindung zwischen dem Benutzergerät und dem zweiten Funkzugangspunkt beendet wird, sobald die Funkkommunikationsverbindung zwischen besagtem Gerät und dem ersten Funkzugangspunkt hergestellt ist.

7. Verfahren nach einem jeglichen der vorgenannten Ansprüche, wobei der erste Funkzugangspunkt in einem Funkzugangsknoten für Privatanschlüsse oder des Typs "femto" enthalten ist.

8. Steuerung eines Funkzugangspunkts einer Zugangsnetzwerksinfrastruktur für den Zugang zu einem Mobilfunkkommunikationsnetzwerk, wobei die Zugangsnetzwerksinfrastruktur eine Vielzahl von Funkzugangspunkten (4a, 5a) umfasst, die jeweils mindestens eine Funkzelle (7, 6) bedienen und dafür ausgelegt sind, um über eine Funkschnittstelle mit mindestens einem Benutzergerät (8, 8a) zu kommunizieren, das sich in der Funkabdeckung mindestens einer der Funkzellen (7, 6) befindet, wobei die Steuerung umfasst:
- Empfangsmittel (MRC), die dafür ausgelegt sind, um eine Kennungsinformation von einem Benutzergerät (8a) zu empfangen, das sich im Abdeckungsbereich mindestens einer der Funkzellen eines ersten (5a) der Funkzugangspunkte befindet, und um die Messung einer die Qualität der Übermittlung zwischen dem Benutzergerät (8a) und dem ersten Funkzugangspunkt (5a) repräsentierenden Größe zu empfangen;
- Speichermittel (Moyens de Memoire, MMC), die dafür ausgelegt sind, um die Kennungen des Benutzergeräts zu speichern, wobei besagte Benutzergeräte einer Gruppe vordefinierter Benutzergeräte angehören, die mit besagtem erstem Funkzugangspunkt (5a) assoziiert sind;
- Mittel für die Verwaltung von Funkkommunikationsverbindungen zwischen dem Benutzergerät (8a) über eine Funkschnittstelle mit dem ersten Funkzugangspunkt (5a) der Infrastruktur des Zugangsnetzwerks (MGC), ausgelegt für das Steuern des Herstellens einer Funkkommunikationsverbindung zwischen dem ersten Funkzugangspunkt (5a) und dem Benutzergerät (8a);
- Steuermittel (MCC), die ausgelegt sind:
für das Vergleichen einer von den Empfangsmitteln empfangenen Kennungsinformation des Benutzergeräts (8a) mit besagten Kennungen des Benutzergeräts, die von den Speichermitteln (MMC) gespeichert werden;
für das Senden der Messung der Größe, die von den Empfangsmitteln empfangen wurden, an die Mittel für die Verwaltung der Funkkommunikationsverbindung (MGC); und, sofern die Kennungsinformation und die mindestens eine der Kennungen übereinstimmen, dafür, dass die Mittel für die Verwaltung der Kommunikationsverbindung die Anwendung eines ersten Kriteriums für die Herstellung einer Funkkommunikationsverbindung anwenden, wobei das erste Kriterium für die Herstellung einer Funkkommunikationsverbindung bezüglich der Qualität der Übermittlung zwischen dem ersten Funkzugangspunkt und dem Benutzergerät vordefiniert ist, um die Herstellung einer Funkkommunikationsverbindung zwischen dem Benutzergerät und dem ersten Funkzugangspunkt zu ermöglichen, wenn besagtes erstes Kriterium durch die empfangene gemessene Größe erfüllt ist,
sofern die Kennungsinformation mit keiner der besagten Kennungen übereinstimmt, dafür, dass bei dem Mittel für die Verwaltung der Funkkommunikationsverbindung die Anwendung eines zweiten Kriteriums für die Herstellung einer Funkkommunikationsverbindung angefordert wird, wobei besagtes zweites Kriterium für die Herstellung einer Funkkommunikationsverbindung in Bezug auf die Qualität der Übertragung zwischen dem ersten Funkzugangspunkt und dem Benutzergerät vordefiniert ist und sich vom ersten Kriterium für die Herstellung einer Funkkommunikationsverbindung zwischen dem Benutzergerät und dem ersten Funkzugangspunkt unterscheidet, um die Herstellung einer Funkkommunikationsverbindung zwischen dem Benutzergerät und dem ersten Funkzugangspunkt zu ermöglichen, wenn besagte zweites Kriterium von der empfangenen, gemessenen Größe erfüllt wird,
wobei das zweite Kriterium für die Herstellung einer Funkkommunikationsverbindung eine höhere Qualität der Übertragung zwischen dem ersten Funkzugangspunkt und dem Benutzergerät erfordert, als das erste Kriterium für die Herstellung einer Funkkommunikationsverbindung.

9. Steuerung eines Funkzugangspunkts nach Anspruch 8, wobei die Mittel zur Verwaltung der Funkkommunikationsverbindung (MGC) ausgelegt sind für die Anwendung besagten ersten und besagten zweiten Kriteriums für die Herstellung einer Funkkommunikationsverbindung, wobei besagtes erstes und besagtes zweites Kriterium jeweils erste und zweite Qualitässchwellenwerte für den Empfang durch das Benutzergerät umfassen.

10. Computerprogramm, welches in einen einem Prozessor zugeordneten Speicher geladen werden kann und Befehle für die Durchführung eines Verfahrens gemäß eines jeglichen der Ansprüche 1 bis 7 bei Ausführen des besagten Programms durch den Prozessor umfasst.

11. Datenträger, auf welchem ein Programm gemäß Anspruch 10 gespeichert wird.

## Claims

1. A method for managing the resources of an access network infrastructure of a cellular radio communication network, the access network infrastructure comprising a plurality of radio access points (4a, 5a) each serving at least one radio cell (7, 6) and able to communicate over a radio interface with at least one user device (8a) located in the radio coverage area of at least one of the radio cells (7, 6), the method comprising the following steps, regarding the user device found in the radio coverage area of at least one of the cells of a first radio access point:
- determining (34) whether the user device belongs to a predefined set of user devices associated with the first radio access point,
- if the user device (8a) belongs to the predefined set of user devices associated with the first radio access point (5a), applying (35) a first criterion for establishing a radio communication link between the user device and the first radio access point, the first criterion for establishing a radio communication link being predefined regarding the transmission quality between the first radio access point and the user device, for the purposes of enabling the establishment of a radio communication link between the user device and the first radio access point when said first criterion is met by a measured value representative of the quality of the radio transmission between the user device (8a) and the first radio access point (5a);
said method being **characterized by** the following steps:
- if the user device does not belongs to said predefined set of user devices associated with the first radio access point, applying (35) a second criterion for establishing a radio communication link between the user device and the first radio access point, said second establishment criterion being predefined regarding the transmission quality between the first radio access point and the user device and being distinct from the first criterion for establishing a radio communication link, for the purposes of enabling the establishment of a radio communication link between the user device and the first radio access point when said second criterion is met by the representative measured value, wherein the second criterion for establishing a radio communication link requires transmission quality between the first radio access point and user device that is higher than the first criterion for establishing a radio communication link.

2. A method according to claim 1, wherein the first and second criteria for establishing a radio communication link respectively comprise first and second reception quality thresholds for reception by the user device to which the measured value must be compared, the first reception quality thresholds for reception by the user device being strictly less than the second reception quality threshold for reception by the user device.

3. A method according to any one of the preceding claims, wherein at least some or all of the radio cells of the radio access points of the network access infrastructure are distributed to form a plurality of categories, each category containing one or more radio cells based on the size of their respective radio coverage areas, and wherein the first criterion is associated with all the cells in a single category.

4. A method according to any one of the claims 1 to 3, wherein the value representative of the radio transmission quality between said user device and the first radio access point is representative of a power level of a signal received from the first radio access point.

5. A method according to any one of the claims 1 to 4, wherein the access network infrastructure is CDMA and the value representative of the radio transmission quality between said user device and the first radio access point is representative of a chip energy level received on a pilot channel of the first radio access point.

6. A method according to any one of the preceding claims, wherein the access network infrastructure comprises a second radio access point serving at least one radio cell, with which a radio communication link is established, and in which the radio communication link is eliminated between the user device and the second radio access point once the radio communication link between said device and the first radio access point has been established.

7. A method according to any one of the preceding claims, wherein the first radio access point is comprised within a residential or "femto" radio access node.

8. A radio access point controller of an access network infrastructure of a cellular radio communication network, the access network infrastructure comprising one or more radio access points (4a, 5a) each serving at least one radio cell (7, 6) and able to communicate on a radio interface with at least one user device (8, 8a) located within the radio coverage area of at least one of the radio cells (7, 6), the controller comprising:
- means of reception (MRC) arranged to receive a piece of identifying information of a user device (8a) located in the coverage area of at least one of the radio cells of a first (5a) of the radio access points and to receive a measurement of a value representative of the transmission quality between the user device (8a) and the first radio access point (5a);
- memory means (MMC) arranged to save user device identifiers, said user devices belonging to a predefined set of user devices associated with said first radio access point (5a);
- means for managing radio communication links between the user device (8a) able to communicate over a radio interface with the first radio access point (5a) of the access network infrastructure (MGC), arranged to control the establishment of radio communication links between the first radio access point (5a) and the user device (8a);
- means of control (MCC) arranged to:
compare a piece of identifying information of the user device (8a) received by the means of reception with said user device identifiers saved by the memory means (MMC),
transmit to the means for managing radio communication links (MGC) the value measurement received by the reception means; and,
when the identifying information and at least one of said identifiers match, to request that the communication link management means apply a first criterion for establishing a radio communication link, the first criterion for establishing a radio communication link being predefined regarding the transmission quality between the first radio access point and the user device, for the purposes of enabling the establishment of a radio communication link between the user device and the first radio access point when said first criterion is met by the received measurement value, and
when the identifying information does not match any of said identifiers, requesting that the radio communication link management means apply a second criterion for establishing a radio communication link, said second criterion for establishing a radio communication link being predefined regarding the transmission quality between the first radio access point and the user device that is distinct from the first criterion for establishing a radio communication link, for the purposes of enabling the establishment of a radio communication link between the user device and the first radio access point when said second criterion is met by the received value measurement, wherein the second criterion for establishing a radio communication link requires transmission quality between the first radio access point and the user device that is higher than the first criterion for establishing a radio communication link.

9. A radio access point controller according to claim 8, wherein the means for managing radio communication links (MGC) are arranged to apply said first and second criteria for establishing a radio communication link, said first and second criterion respectively comprising first and second reception quality thresholds for reception by the user device.

10. A computer program that may be loaded in a memory associated with a processor, and comprising instructions for the implementation of a method according to any one of the claims 1 to 7 when said program is run by the processor.

11. A computing medium on which is stored a program according to claim 10.
